# FASCICULE DE BREVET EUROPEEN

(11) **EP 1 283 124 B1**
(45) Date de publication et mention de la délivrance du brevet: **30.06.2004**
(21) Numéro de dépôt: 02370033.9
(22) Date de dépôt: 30.07.2002
(51) Int. Cl.: B60N 2/015

(54) **Système pour la fixation d'un siège sur un plancher de véhicule**
Vorrichtung zur Befestigung eines Sitzes auf einem Fahrzeugboden
Mounting system for seat on a vehicle floor

(30) Priorité: 10.08.2001 FR 0110741
(43) Date de publication de la demande: 12.02.2003
(73) Titulaire: BV Productions, S.A., 62420 Billy Montigny (FR)
(72) Inventeur: Vandenbrand, Bernard, 62420 Billy Montigny (FR)
(74) Mandataire: Matkowska, Franck

(56) Documents cités:
- DE-A- 19 747 417
- DE-U- 29 517 797
- FR-A- 2 728 860
- GB-A- 803 696

## Description

La présente invention concerne le domaine de la fixation d'un siège sur le plancher d'un véhicule de transport, et a pour principal objet un nouveau système de fixation faisant interface entre au moins un siège et le plancher d'un véhicule: L'invention trouve son application à tout type de véhicule de transport, et préférentiellement, mais non exclusivement, à des véhicules fabriqués en petite et moyenne série tels que par exemple des minibus ou minicars.

Les sièges de véhicule de transport, qu'ils soient de type siège individuel ou de type banquette, sont généralement fixés par rapport au plancher du véhicule en étant boulonnés et/ou vissés, à travers le plancher du véhicule, soit sur des structures résistantes sous-jacentes (par exemple longerons) qui permettent de renforcer le plancher, soit sur la structure du châssis du véhicule portant le plancher. Le système de fixation utilisé est de ce fait dépendant de la position des structures de renforcement du plancher ou de la structure du châssis du véhicule, et est donc généralement spécifique et adapté à un type donné de véhicule de transport. Egalement, les systèmes de fixation de sièges doivent répondre, en terme de résistance mécanique à l'arrachage et à la déformation, à des normes de sécurité sévères. Or avec des systèmes de fixation liés mécaniquement à des structures de renforcement du plancher ou au châssis du véhicule, on est contraint d'obtenir une homologation de la fixation du siège pour chaque type de véhicule.

On connaît par le document GB-A-803 696 un plancher de véhicule équipé d'un système de fixation d'un siège qui comprend une embase posée sur le plancher et fixée à celui-ci, ladite embase comportant des trous oblongs pour la fixation du siège. Cependant, selon le demandeur, un tel système de fixation ne permet pas d'obtenir une fixation du siège qui soit fiable, ne permettant pas de répondre aux exigences recherchées en terme de résistance mécanique à l'arrachage et à la déformation.

La présente invention a pour but de proposer un nouveau système de fixation d'un siège sur le plancher d'un véhicule de transport, qui d'une part peut être utilisé avec différents planchers, indépendamment de la présence et de la position de structures de renforcement du plancher (longerons), et quelle que soit la structure du châssis du véhicule portant le plancher, et qui d'autre part permet une fixation du siège qui est très fiable.

C'est un autre but de l'invention que de proposer un nouveau système de fixation qui est simple et rapide à monter sur un plancher de véhicule.

La présente invention a ainsi pour premier objet un plancher de véhicule équipé d'au moins un système de fixation d'au moins un siège, ledit système de fixation comprenant une embase d'appui et de fixation ; ladite embase est posée sur le plancher, est fixée au plancher et comporte des trous pour la fixation d'au moins un siège. Un tel ensemble plancher de véhicule et système de fixation est divulgué, par exemple dans GB-A-803 696. De manière caractéristique, le système de fixation comprend au moins une barre en combinaison avec l'embase d'appui. Chaque barre est positionnée entre le plancher et l'embase, et est en contact avec la face inférieure de l'embase orientée vers le plancher ; pour la fixation d'au moins un siège, chaque barre comportent des trous en correspondance avec ceux de l'embase.

De préférence, chaque barre est fixée à l'embase.

Dans une variante préférée de réalisation, l'embase consiste en une tôle qui a été pliée en sorte de comporter, pour chaque barre, un décrochement, et chaque barre est logée à l'intérieur d'un décrochement de l'embase.

C'est un autre objet de l'invention que de proposer un système de fixation, qui est destiné à être fourni à l'assembleur du véhicule de transport, en vue de son montage sur le plancher d'un véhicule. Ce système de fixation comporte de manière connue par GB-A-803 696 une embase de fixation et d'appui conçue pour être posée sur un plancher et pour être fixée audit plancher. De plus, il comporte au moins une barre de fixation destinée à être positionnée entre le plancher et l'embase.

Plus particulièrement, des trous pour la fixation d'au moins un siège sur chaque barre, et à travers l'embase, sont réalisés dans chaque barre et dans l'embase.

D'autres caractéristiques et avantages de l'invention apparaîtront plus clairement à la lecture de la description ci-après de plusieurs variantes de réalisation de l'invention, laquelle description est donnée à titre d'exemple non limitatif et en référence aux dessins annexés sur lesquels :
- la figure 1 représente, vu de derrière, l'intérieur de l'habitacle d'un véhicule de transport, dont les sièges sont fixés sur le plancher du véhicule au moyen d'un système de fixation réalisé conformément à une variante préférée de réalisation de l'invention,
- la figure 2 est une vue en coupe de détail de la fixation d'un pied d'un siège de la figure 1,
- la figure 3 est une représentation en perspective d'un siège de la figure 1 et de son système de fixation sur le plancher de véhicule,
- la figure 4 est une vue de détail illustrant en perspective les moyens de fixation d'un pied du siège de véhicule,
- la figure 5 est une vue de côté de deux rangées de sièges du véhicule de la figure 1,
- les figures 6 et 7 sont respectivement des vues de dessus et de côté de l'embase de fixation et d'appui du système de fixation des figures 1 à 5,
- la figure 8 est une vue de dessus d'une barre du système de fixation des figures 1 à 5,
- les figures 9, 10 et 11 représentent schématiquement trois autres variantes de réalisation d'un système de fixation conforme à l'invention.
- la figure 12 représente un ensemble (plancher de véhicule / système de fixation) conforme à une cinquième variante de réalisation dans laquelle l'embase du système de fixation est formée de deux tôles distinctes entretoisées, et
- la figure 13 est une vue de dessus de l'ensemble de la figure 12,

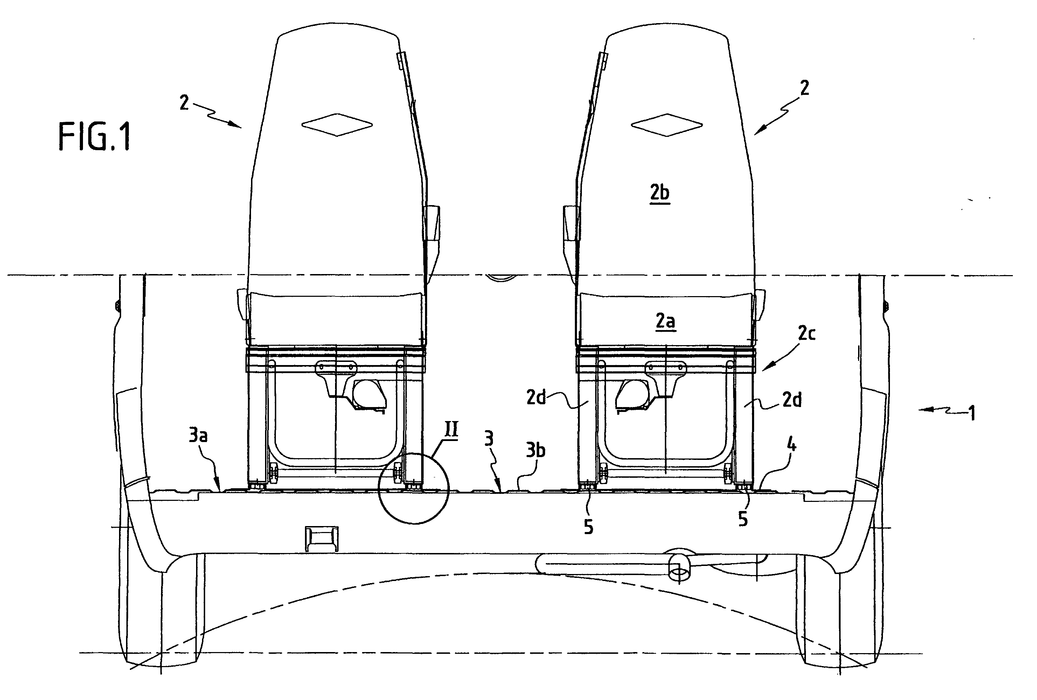

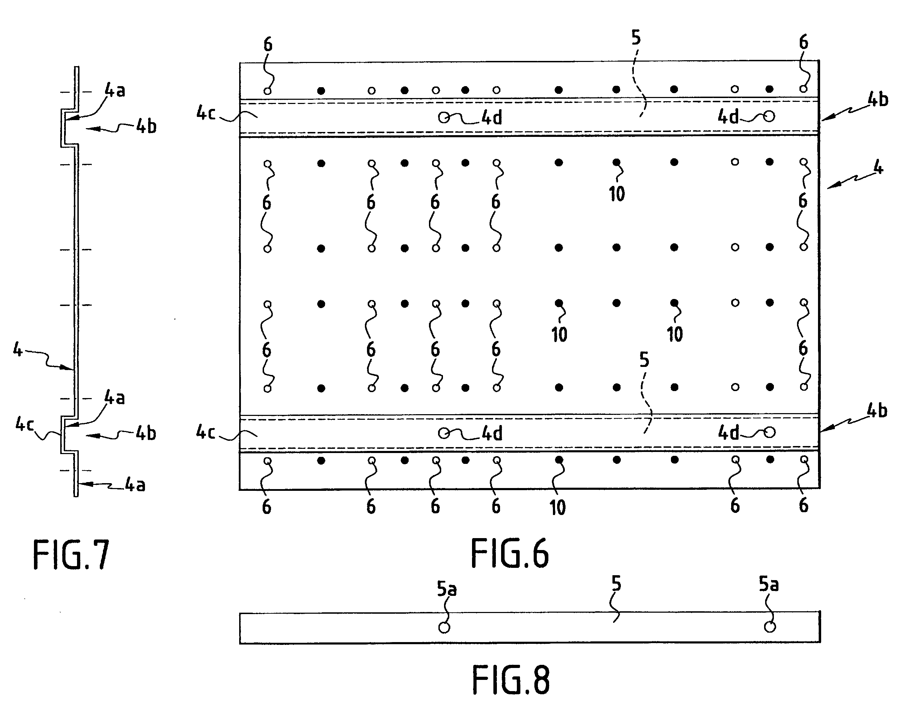

En référence aux figures 1 et 5, on a représenté un véhicule de transport 1, du type minicar ou minibus, dont l'habitacle est équipé de deux rangées successives de deux sièges individuels 2. Sur la figure 1, seule la rangée arrière est visible. Chaque siège individuel 2 comporte de manière usuelle une assise 2a et un dossier 2b, l'assise 2a étant supportée par un piétement 2c qui, dans l'exemple particulier illustré, comporte quatre pieds 2d réalisés au moyen de profilés en acier.

Chaque siège 2 est fixé sur le plancher 3 du véhicule 1 au moyen d'un système de fixation comportant essentiellement une embase 4 d'appui et de fixation et des barres 5. Dans l'exemple particulier de réalisation illustré, le système de fixation comporte au moins deux barres 5 parallèles et espacés pour chaque siège 2. Le nombre de barres 5 du système de fixation n'est cependant pas limitatif de l'invention, et sera adapté au cas par cas en fonction du type de siège, et notamment de la structure de son piétement. Egalement, l'invention pas limitée à la structure particulière de siège 2 des figures annexées, mais peut être utilisée pour fixer tout type de siège connu quelque soit notamment la structure du piétement du siège. Egalement, le système de fixation de l'invention pourra être utilisé non seulement pour fixer des sièges individuels, mais également pour fixer des sièges de type banquette.

Dans la variante préférée de réalisation des figures 1 à 8, l'embase 4 du système de fixation, est une tôle plane rigide rectangulaire, de préférence en acier et présentant une faible épaisseur (de l'ordre par exemple de 2mm), qui a été pliée localement en sorte de former dans l'une des ses faces 4a, dite par la suite face inférieure, deux décrochements longitudinaux 4b parallèles et espacés, qui s'étendent sur toute la longueur de la tôle 4. Chacun de ces décrochements 4b est dimensionné en sorte de pouvoir servir de logement à une barre 5 du système de fixation. Dans l'exemple particulier illustré, chaque barre 5 présente une section transversale rectangulaire, et chaque décrochement 4b présentent une section en forme de U. Ces sections particulières ne sont pas limitatives de l'invention. On pourrait notamment utiliser des barres cylindrique, et une embase dont les décrochements présentent une section en arc de cercle.

Pour permettre sa fixation, notamment par rivetage, sur le plancher 3, l'embase 4 est percée d'une pluralité de trous de fixation 6 lisses et débouchants. Egalement, dans chaque paroi 4c correspondant à la paroi de fond d'un décrochement 4b en forme de U sont ménagés deux trous de fixation débouchants 4d, permettant le passage d'une vis 9 de fixation.

Chaque barre 5 du système de fixation est de préférence un fer plat, en acier, dont l'épaisseur et la largeur sont suffisamment faibles pour que le fer plat puisse être logé intégralement à l'intérieur d'un décrochement 4b de l'embase 4. Egalement, dans chaque barre 5 sont ménagés deux trous de fixation taraudés 5a, espacés de la même distance que celle séparant les deux trous de fixation 4d d'un décrochement 4b de l'embase 4, de telle sorte qu'une fois la barre 5 logée dans le décrochement 4b, les trous de fixation 5a de la barre 5 viennent en correspondance respectivement avec les trous de fixation 4d du décrochement 4b.

La fixation d'un siège 2 sur le plancher 3 au moyen du système de fixation qui vient d'être décrit est réalisée en deux phases. Dans une première phase, on réalise le montage du système de fixation (embase 4 et barre 5) sur le plancher 3 du véhicule de transport. Dans une deuxième phase, on fixe le piétement du siège 2 sur le système de fixation préalablement monté. Ces deux phases vont à présent être détaillées.

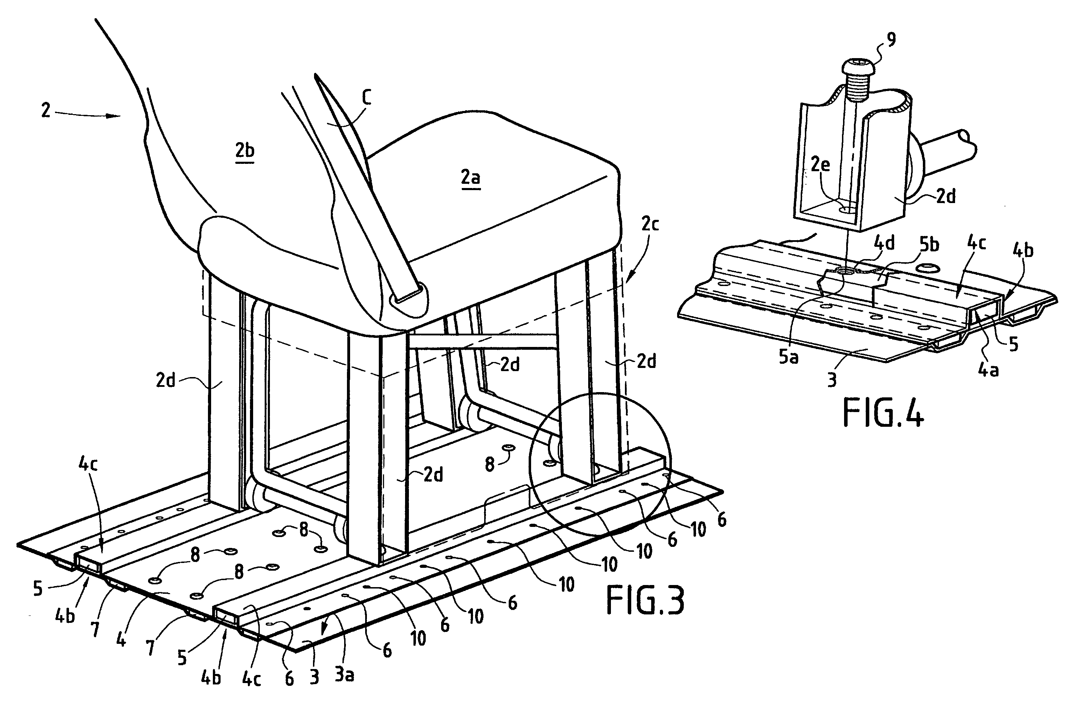

Le montage du système de fixation est réalisé par exemple selon la succession d'étapes suivantes. Dans une première étape, on commence par assembler les barres 5 et l'embase 4. A cet effet, on positionne et on fixe chaque barre 5 à l'intérieur d'un décrochement 4b de l'embase 4, de telle sorte que chaque barre 5 vienne en contact avec la face interne 4a de paroi de fond 4c du décrochement 4b, et que les trous de fixation 5a de la barre soient en correspondance respectivement avec les trous 4d du décrochement 4b de l'embase 4. La fixation de chaque barre 5 dans le décrochement 4b sera réalisée par tout moyen connu. De préférence, cette fixation est réalisée par collage de la face supérieure 5b (figure 4) de la barre 5 sur la face interne 4a de la paroi de fond 4c du décrochement 4b. Cette étape d'assemblage, peut avoir été réalisée préalablement sur un autre site que le site de montage du système de fixation sur le plancher, et peut par exemple avoir été réalisée par le fournisseur du système de fixation. Elle peut également être réalisée par le monteur du système de fixation, lorsque le système de fixation est fourni non assemblé.

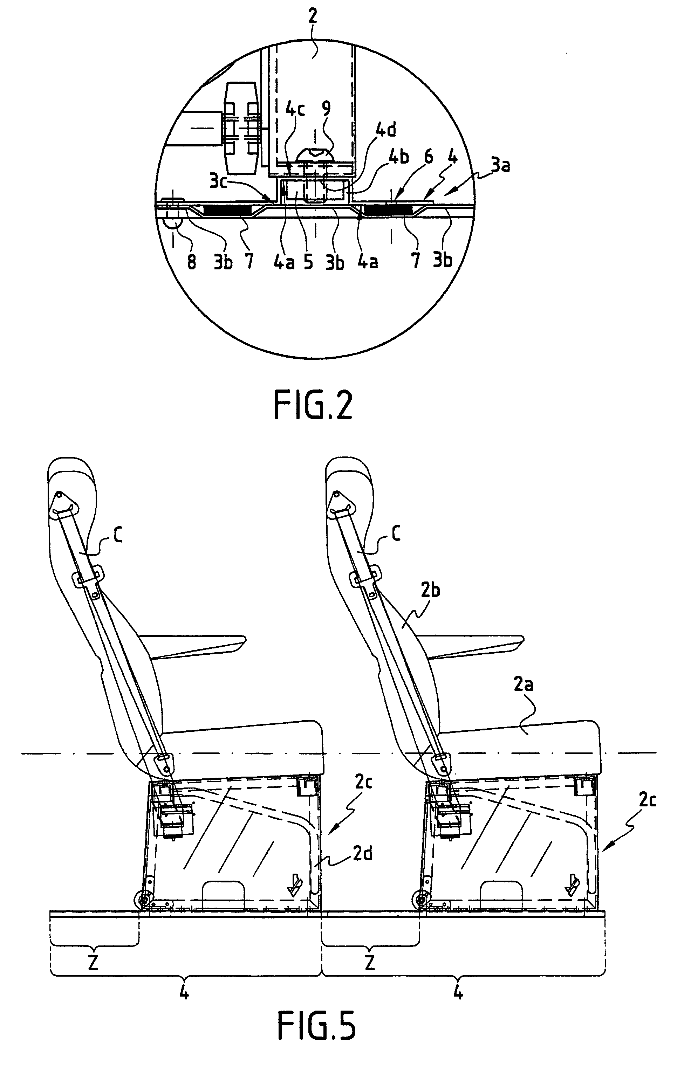

Dans une deuxième étape, on nettoie la face supérieure 3a du plancher 3, notamment en réalisant un dégraissage de cette surface, au moins dans la zone qui sera couverte par l'embase 4. Dans l'exemple particulier de réalisation illustré sur les figures 1 à 4, la face supérieure 3a du plancher n'est pas parfaitement plane, mais comporte une pluralité de bossages 3b (voir notamment figure 2), parallèles, s'étendant selon l'axe longitudinal du véhicule, lesdits bossages ayant pour fonction de rigidifier la structure du plancher 3. Le sommet 3c de chaque bossage est néanmoins plat, l'ensemble de ces sommets 3c étant sensiblement coplanaires, et permettant de définir une surface porteuse sensiblement plane.

Dans une troisième étape, on positionne, sans la fixer, l'embase 4 sur la face supérieure 3a du plancher, au contact du sommet 3c des bossages 3b du plancher, puis on réalise un contre-perçage du plancher 3 à travers les trous de fixation 6 de l'embase 4.

Dans une quatrième étape, on retire l'embase 4 et dans la zone destinée à être couverte par l'embase 4, on fixe des cales 7 (figures 1 et 2) dans chacun des creux du plancher entre deux bossages 3b. Ces cales 7 sont fixées par exemple en étant collées. Il s'agit par exemple de cales en bois qui s'étendent sur toute la longueur de l'embase 4. L'épaisseur de chacune de ces cales 7 est prévue en sorte de compenser en hauteur le creux entre chaque bossage successif 3b du plancher, ce qui permet d'augmenter la surface porteuse pour l'embase 4. Il convient de souligner que cette étape de fixation des cales 7, d'une part n'est mise en oeuvre que dans le cas d'un plancher avec bossages 3b, et n'est donc pas mise en oeuvre lorsque le plancher présente une surface supérieure 3a parfaitement plane. En outre, dans le cas d'un plancher avec bossages, cette étape de fixation des cales est préférentielle car elle permet d'augmenter la surface porteuse pour l'embase 4, mais est toutefois facultative.

Dans une cinquième étape, on enduit la zone du plancher (y compris les cales 7) destinée à recevoir l'embase 4 avec de la colle, en vue de la fixation de l'embase. La colle utilisée est par exemple une colle à base d'au moins une résine synthétique polymérisable au contact de l'air et de l'humidité. De préférence, il s'agit d'une colle de type élastomère, et par exemple à base de polyuréthane.

Dans une sixième étape, on repositionne sur le plancher l'embase 4, portant les barres 5 fixées dans les décrochements 4b, en sorte de la coller sur la surface supérieure du plancher 3. Ensuite, on renforce la fixation de l'embase 4 en la rivetant au plancher 3 au moyen d'une pluralité de rivets 8 (figure 1 et 2) passés à travers les trous de fixation 6 de l'embase 4 et à travers les trous qui ont été contre-percés dans le plancher lors de la troisième étape précitée.

Selon une variante de réalisation additionnelle de l'invention, lorsque la colle utilisée pour fixer l'embase est une colle à base d'au moins une résine qui se polymérise au contact de l'air, l'embase 4 est de préférence percée d'une pluralité de trous d'aération 10 de faible dimension (par exemple d'un diamètre de l'ordre de 5mm), et répartis sur toute la surface de l'embase. Ces trous d'aération 10 ( qui ont été noircis sur les figures 3 et 6 afin de les différencier visuellement des trous de fixation 6) ont pour fonction de faciliter le contact de la colle avec l'air et permettre une meilleure polymérisation de la colle.

Une fois la première phase précitée de montage du système de fixation de l'invention réalisée, la fixation d'un siège 2 peut être réalisée dans une deuxième phase. Il suffit pour cela de positionner le siège sur l'embase 4, de telle sorte que son piétement repose sur la face externe de la paroi de fond 4c des décrochements 4b de l'embase 4. Dans l'exemple de réalisation illustré, chaque pied 2d du piétement du siège 2 est percé pour sa fixation (figure 4/ trou 2e), et est positionné de telle sorte que chaque trou de fixation 2e d'un pied 2d se trouve en vis-à-vis des trous de fixation 4d de l'embase 4 et 5a de la barre 5. Une fois le siège 2 positionné, on fixe chaque pied de siège au moyen d'une vis 9 passée à travers les trous 2e, 4d, 5a. Le serrage des vis 9 se traduit également par une mise en pression plus importante de chaque barre 5 contre la paroi de fond 4c d'un décrochement 4b.

Lorsqu'un siège 2 est sollicité en traction, les sollicitations mécaniques exercées par le piétement du siège sont réparties sur toute la longueur de l'embase 4, par l'intermédiaire des barres 5, qui prennent appui sur la paroi de fond 4c des décrochement 4b de l'embase. Compte tenu en outre de l'importance de la surface d'appui et de fixation sur le plancher de cette embase 4, on obtient ainsi une fixation extrêmement fiable du siège, qui peut de ce fait résister à des sollicitations mécaniques importantes. Ainsi, le siège peut avantageusement comporter une ceinture (C) embarquée (figure 5) qui n'a pas besoin d'être fixée à la structure de l'habitacle du véhicule. Egalement, selon un autre avantage de l'invention, une fois que le système de fixation (embase 4 et barres 5) a été testé et homologué, ce système de fixation, qui fait l'interface entre le siège et le plancher du véhicule, et qui est fixé uniquement au plancher du véhicule, et n'est pas fixé sur le châssis du véhicule, peut être utilisé dans un autre type de véhicule sans qu'il soit nécessaire de refaire une homologation du système de fixation pour cet autre type de véhicule.

Dans la variante de réalisation, illustrée sur les figures 1 à 8, dans le but d'améliorer la solidité de la fixation, l'embase 4 est fixée et prend appui sur le plancher 3 non seulement sur une zone couverte par le piètement 2c du véhicule, mais également au-delà dans une zone (Z) (figures 3 et 5) située en partie arrière du piètement 2c du siège 2. Dans cette zone arrière (Z), on veille d'ailleurs à ce que la fixation de l'embase par rapport au plancher soit particulièrement fiable, notamment en prévoyant un nombre plus important de rivets de fixation 8 dans cette zone. Cette zone (Z) de fixation et d'appui de l'embase permet d'opposer une meilleur résistance mécanique à un basculement vers l'avant du siège 2. La surface de cette zone sera choisie au cas par cas en fonction de la solidité recherché pour la fixation du siège. De préférence, mais de manière non limitative de l'invention, la surface de ladite zone arrière (Z) sera choisie en sorte de représenter au moins 15%, et de préférence au moins 30% de la surface totale de l'embase 4.

Dans l'exemple de réalisation qui a été décrit en référence aux figures 1 à 8, le système de fixation est utilisé sur un plancher 3 avec bossages 3b. Bien entendu, ce même système de fixation peut avantageusement également être utilisé avec un plancher présentant une surface supérieure plane. Dans les variantes de réalisation illustrées, les barres 5 du système de fixation sont fixées selon l'axe longitudinal du véhicule, c'est-à-dire selon l'axe avant-arrière des sièges. Cette caractéristique, bien que préférentielle, n'est toutefois pas limitative. Dans une autre variante, ces barres 5 pourraient également être disposées dans le sens transverse du véhicule, c'est-à-dire avec une orientation transversale à celle des barres 5 de la figure 3. Dans ce cas, les décrochements 4b de l'embase 4 devront avoir cette même orientation transversale.

En référence aux figures 1 et 5, dans l'exemple illustré, chaque siège 2 est fixé individuellement au moyen de son propre système de fixation (embase 4 et barres 5). Ceci n'est toutefois pas limitatif de l'invention, dans une autre variante, il est par exemple envisageable d'utiliser une seule et même embase 4 et/ou une seule et même barre 5, pour la fixation de plusieurs sièges (que ce soit dans le sens de avant/arrière du véhicule ou dans le sens transverse).

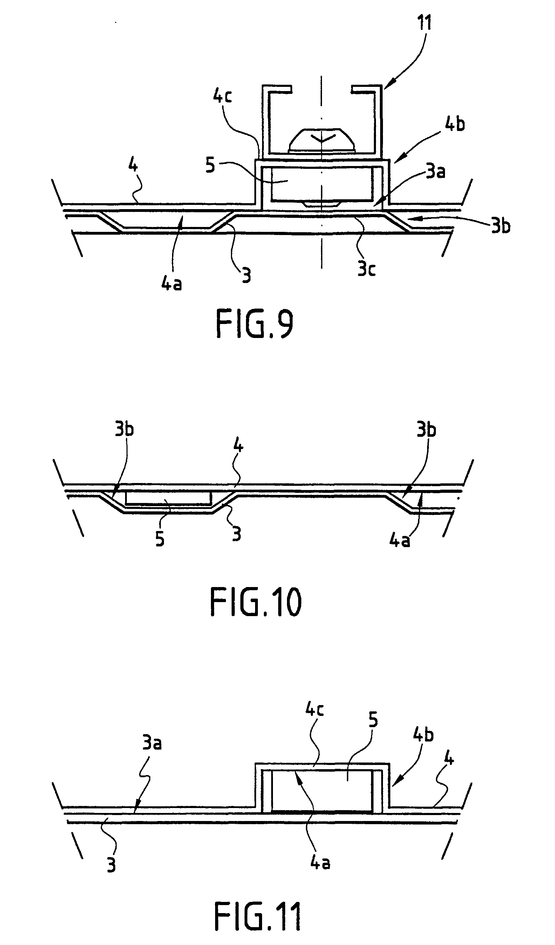

Egalement, dans une autre variante, le piètement d'un siège 2 pourra être fixé sur l'embase 4 au moyen d'une pièce intermédiaire faisant l'interface entre le piètement et l'embase. Il peut notamment s'agir d'une pièce intermédiaire conçue pour rendre facilement amovible le siège en vue de son montage et démontage. Cette pièce intermédiaire peut également être conçue pour permettre un réglage aisé de la position du siège, tel que par exemple la pièce intermédiaire 11 de la variante de la figure 9, qui forme un rail (ou glissière) et permet un montage coulissant d'un siège.

On a représenté sur les figures 10 et 11, deux autres variantes de réalisation d'un système de fixation de l'invention. Dans la variante de la figure 10, l'embase de fixation et d'appui 4 est une tôle plane qui est fixée sur un plancher comportant des bossages, et on utilise les creux entre bossages pour loger les barres 5 qui sont fixées sur la face inférieure de l'embase 4.

Dans la variante de la figure 11, l'épaisseur de chaque barre 5 est telle que chaque barre 5 est en contact à la fois avec la face inférieure 4a de l'embase, et avec la face supérieure 3a du plancher. Dans ce type de variante, il n'est pas nécessaire que chaque barre 5 soit fixée à l'embase 4.

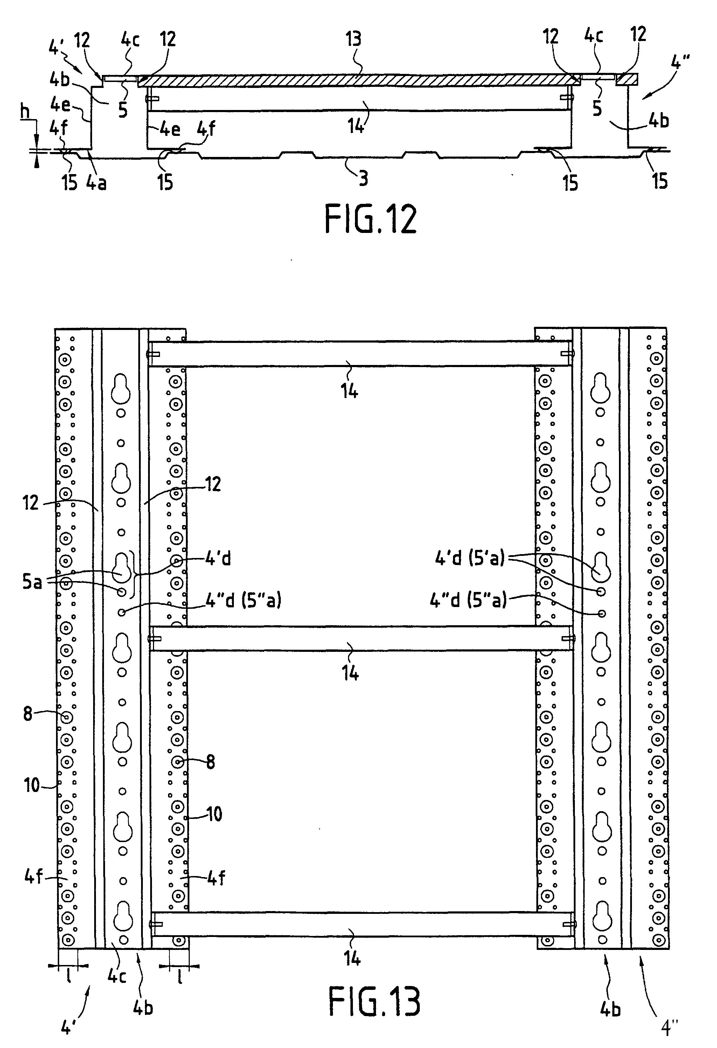

Dans les variantes de réalisation précédemment décrites, l'embase 4 du système de fixation est constituée par une tôle unique. Cette caractéristique n'est pas limitative de l'invention. On a représenté aux figures 12 et 13 une autre variante de réalisation de l'invention dans laquelle l'embase 4 est formée de deux tôles distinctes 4' et 4"

En référence à la figure 12, chaque tôle 4', 4" est une tôle qui a été pliée en sorte de former un décrochement longitudinal 4b en forme de U. Ce décrochement 4b est délimité par une paroi de fond 4c et deux parois latérales 4e, chaque paroi latérale 4e de la tôle se prolongeant en outre sensiblement à angle droit par deux pattes longitudinales 4f, qui permettent la fixation de la tôle 4', 4" sur le plancher 3 du véhicule. Dans chaque décrochement 4b est logée et fixée une barre 5, ladite barre étant par exemple soudée avec la paroi de fond 4c du décrochement 4b.

Les deux tôles 4' et 4" sont fixées sur le plancher 3 du véhicule de telle sorte que leurs décrochements longitudinaux 4b s'étendent sensiblement parallèlement l'un à l'autre. La fixation de chaque tôle 4',4" sur le plancher 3 est obtenue de manière similaire aux autres variantes précédemment décrites, par collage et rivetage (figure 13/ rivets 8) des pattes longitudinales 4f sur le plancher 3.

Plus particulièrement, dans l'exemple de réalisation des figures 12 et 13, chaque patte de fixation 4f d'une tôle 4',4" comporte deux rangées de trous d'aération 10 (pour la polymérisation et le séchage de la colle), et les rivets 8 sont positionnés entre les deux rangées de trous d'aération 10. La colle pour la fixation de chaque tôle 4', 4" est appliquée sur la face inférieure de chaque patte de fixation 4f, au niveau des trous d'aérations 10, par exemple sous la forme d'un cordon de colle, et sur une bande longitudinale de largeur l ( figure 13), qui s'étend sur toute la longueur des rangées de trous d'aération 10.

De préférence, tel qu'illustré sur les figures 12 et 13, les deux tôles 4' et 4" sont entretoisées l'une par rapport à l'autre au moyen d'entretoises 14, par exemple sous la forme de tubes carrés ou équivalents, fixés par tout moyen approprié (par exemple par vissage, rivetage, etc...) sur les deux ailes latérales 4e en vis-à-vis des tôles 4' et 4". Outre cette fonction d'entretoise, les éléments 14 servent également de support à un plancher additionnel en bois 13. Ce plancher additionnel en bois 13 est représenté uniquement sur la figure 12, et par souci de clarté n'a pas été représenté sur la figure 13.

De préférence, au niveau de la jonction entre la paroi de fond 4c et chaque aile latérale 4e, chaque tôle 4', 4" comporte une gorge 12 longitudinale en forme de L, qui permet le calage en position du plancher 13.

Selon une variante de réalisation additionnelle de l'invention, la face inférieure 4a de l'embase 4 destinée à venir au contact du plancher 3, c'est-à-dire dans la variante de la figure 12 la face inférieure 4a des deux pattes de fixation 4f de chaque tôle comporte des bossages 15 longitudinaux, ou une pluralité de bossages, ou tout autre moyen équivalent, permettant de surélever d'une hauteur h prédéterminée l'embase 4 par rapport au plancher 3. Cette surélévation contrôlée de l'embase 4 par rapport au plancher 3 permet avantageusement de fixer l'embase 4 (tôles 4' et 4" de la figure 12) sur le plancher 3, par collage, au moyen d'une épaisseur de colle contrôlée par la hauteur h. Bien entendu, ces mêmes moyens 15 de surélévation de l'embase 4 par rapport au plancher pourront être prévus sur une embase constituée d'une tôle unique telle que celle précédemment décrite en référence aux figures 1 à 11.

De manière comparable à ce qui a été décrit pour les variantes de réalisation des figures 1 à 11, la paroi de fond 4c de chaque décrochement 4b et chaque barre 5 comportent respectivement des trous de fixation en vis-à-vis, pour la fixation de sièges de véhicules sur les barres 5, à travers la paroi de fond 4c de chaque décrochement 4b. Dans l'exemple particulier de la figure 13, ces trous de fixation traversants pour la fixation d'un siège sont référencés 4'd et 4"d en ce qui concerne chaque tôle 4', 4", et sont référencés 5'a et 5"a en ce qui concerne chaque barre 5.

## Revendications

1. Plancher (3) de véhicule équipé d'au moins un système de fixation d'au moins un siège (2), ledit système de fixation comprenant une embase (4), d'appui et de fixation, ladite embase (4) étant posée sur le plancher (3) et fixée au plancher (3), et comportant des trous pour la fixation d'au moins un siège, **caractérisé en ce que** le système de fixation comprend au moins une barre (5) en combinaison avec l'embase (4) d'appui, **en ce que** chaque barre (5) est positionnée entre le plancher (3) et l'embase (4), et est en contact avec la face inférieure de l'embase (4) orientée vers le plancher, et **en ce que** pour la fixation d'au moins un siège, chaque barre (5) comporte des trous (5a, 5'a, 5"a ) en correspondance avec les trous de l'embase (4d, 4'd, 4"d).

2. Ensemble d'un plancher de véhicule et d'un système de fixation selon la revendication 1 **caractérisé en ce que** chaque barre (5) est fixée à l'embase (4).

3. Ensemble d'un plancher de véhicule et d'un système de fixation selon la revendication 1 ou 2 **caractérisé en ce que** l'embase (4) consiste en une tôle qui a été pliée en sorte de comporter, pour chaque barre (5), un décrochement (4b), et **en ce que** chaque barre (5) est logée l'intérieur d'un décrochement (4b) de l'embase.

4. Ensemble d'un plancher de véhicule et d'un système de fixation selon l'une des revendications 1 à 3 **caractérisé en ce que** le système de fixation comporte au moins deux barres (5) parallèles et espacées.

5. Ensemble d'un plancher de véhicule et d'un système de fixation selon la revendication 1 ou 2 **caractérisé en ce que** l'embase (4) comporte deux tôles (4'),(4") distinctes, et au moins une barre (5) pour chaque tôle (4', 4").

6. Ensemble d'un plancher de véhicule et d'un système de fixation selon la revendication 5, **caractérisé en ce qu'**il comporte un décrochement (4b) dans lequel est logée au moins une barre (5).

7. Ensemble d'un plancher de véhicule et d'un système de fixation selon les revendications 5 ou 6 **caractérisé en ce que** les deux tôles (4',4") sont entretoisées l'une par rapport à l'autre.

8. Ensemble d'un plancher de véhicule et d'un système de fixation selon la revendication 3 ou la revendication 6 **caractérisé en ce que** chaque décrochement (4b) comporte au moins une gorge longitudinale (12), et **en ce qu'**un plancher additionnel (13) est calé dans les deux gorges longitudinales (12) de deux décrochements (4b) parallèles.

9. Ensemble d'un plancher de véhicule et d'un système de fixation selon les revendications 7 et 8 **caractérisé en ce que** les moyens (14) permettant d'entretoiser les deux tôles (4', 4") l'une par rapport à l'autre, font également office de support pour le plancher additionnel (13).

10. Ensemble d'un plancher de véhicule et d'un système de fixation selon l'une des revendications 1 à 9 **caractérisé en ce que** la face inférieure (4a) de l'embase (4) comporte des moyens (15) permettant de surélever l'embase (4) d'une hauteur (h) prédéterminée.

11. Ensemble d'un plancher de véhicule et d'un système de fixation selon l'une des revendications 1 à 10 **caractérisé en ce que** l'embase est collée et/ou rivetée sur le plancher (3).

12. Ensemble d'un plancher de véhicule et d'un système de fixation selon la revendication 11 **caractérisé en ce que** l'embase (4) étant collée sur le plancher au moyen d'une colle à base d'au moins une résine polymérisable au contact de l'air, ladite embase (4) est pourvue d'une pluralité de trous (10) d'aération.

13. Ensemble d'un plancher de véhicule et d'un système de fixation selon l'une des revendications 1 à 12 **caractérisé en ce que** le plancher (3) comporte une pluralité de bossages (3b) parallèles, et **en ce que** dans les espaces entre deux bossages, sont montés des cales (7) fixées à l'embase (4) et au plancher (3).

14. Ensemble d'un plancher de véhicule et d'un système de fixation selon l'une des revendications 1 à 13, et siège de véhicule (2), **caractérisé en ce que** ledit siège (2) est fixé sur une ou plusieurs barres (5) du système de fixation, à travers l'embase (4) du système de fixation.

15. Ensemble d'un plancher de véhicule et d'un système de fixation de siège de véhicule selon la revendication 14 **caractérisé en ce que** la ou les barres de fixation (5) sont orientées sensiblement parallèlement selon l'axe avant/arrière du siège (2).

16. Ensemble d'un plancher de véhicule et d'un système de fixation de siège de véhicule selon la revendication 14 ou 15 **caractérisé en ce que** l'embase (4) du système de fixation est fixée et prend appui sur le plancher (3) au moins dans une zone arrière (Z) située en arrière du piètement (2c) du siège.

17. Ensemble d'un plancher de véhicule et d'un système de fixation selon la revendication 16 **caractérisé en ce que** la surface de ladite zone arrière (Z) représente au moins 15%, et de préférence au moins 30% de la surface totale de l'embase (4).

18. Véhicule (1) dont l'habitacle est équipé d'un ensemble d'un plancher de véhicule et d'un système de fixation visé à l'une quelconque des revendications 1 à 17.

19. Système pour la fixation d'au moins un siège sur un plancher de véhicule, ledit système comportant une embase (4) de fixation et d'appui, conçue pour être posée sur un plancher (3) et pour être fixée audit plancher (3), **caractérisé en ce qu'**il comporte au moins une barre de fixation (5) conçue pour être positionnée entre le plancher (3) et l'embase (4).

20. Système selon la revendication 19 **caractérisé en ce que** des trous (5a, 4d ; 5'a, 4'd ; 5"a, 4"d) pour la fixation d'au moins un siège sur chaque barre (5), et à travers l'embase (4), sont réalisés dans chaque barre (5) et dans l'embase (4).

21. Système selon la revendication 19 ou 20 **caractérisé en ce** l'embase consiste en une tôle qui a été pliée en sorte de comporter au moins un décrochement (4b), apte à servir de logement à au moins une barre (5).

22. Système selon la revendication 21 **caractérisé en ce que** l'embase comporte au moins deux décrochements (4b), espacés et parallèles.

23. Système selon la revendication 19 ou 20 **caractérisé en ce que** l'embase (4) comporte deux tôles (4'),(4") distinctes, et au moins une barre (5) pour chaque tôle (4', 4").

24. Système selon la revendication 23 **caractérisé en ce que** chaque tôle (4',4") comporte un décrochement (4b) apte à servir de logement à au moins une barre (5).

25. Système selon les revendications 23 ou 24 **caractérisé en ce que** les deux tôles (4',4") sont entretoisées l'une par rapport à l'autre.

26. Système selon la revendication 21 ou la revendication 24 **caractérisé en ce que** chaque décrochement (4b) comporte au moins une gorge longitudinale (12), pour le calage d'un plancher additionnel (13).

27. Système selon l'une des revendications 19 à 26 **caractérisé en ce que** la face inférieure de l'embase (4) comporte des moyens (15) permettant de surélever l'embase (4) d'une hauteur (h) prédéterminée.

28. Système selon l'une des revendications 19 à 27 **caractérisé en ce que** chaque barre (5) est fixée à l'embase.

29. Système selon l'une des revendications 19 à 28 **caractérisé en ce que** l'embase est percée d'une pluralité de trous d'aération (10).

## Patentansprüche

1. Boden (3) eines Fahrzeuges mit mindestens einem Befestigungssystem für mindestens einen Sitz (2), wobei das Befestigungssystem eine der Auflage und der Befestigung dienende Grundplatte (4) umfasst, wobei diese Grundplatte (4) auf dem Boden (3) aufliegt und am Boden (3) befestigt ist und Löcher zur Befestigung mindestens eines Sitzes aufweist, **dadurch gekennzeichnet, dass** das Befestigungssystem mindestens eine mit der der Auflage dienenden Grundplatte (4) kombinierte Stange (5) umfasst, dass jede Stange (5) zwischen dem Boden (3) und der Grundplatte (4) positioniert ist und mit der dem Boden zugewandten Unterseite der Grundplatte (4) in Kontakt steht, und dass zur Befestigung mindestens eines Sitzes jede Stange (5) Löcher (5a, 5'a, 5"a) aufweist, die den Löchern der Grundplatte (4d, 4'd, 4"d) entsprechen.

2. Baueinheit bestehend aus einem Fahrzeugboden und einem Befestigungssystem nach Anspruch 1, **dadurch gekennzeichnet, dass** jede Stange (5) an der Grundplatte (4) befestigt ist.

3. Baueinheit bestehend aus einem Fahrzeugboden und einem Befestigungssystem nach Anspruch 1 oder 2, **dadurch gekennzeichnet, dass** die Grundplatte (4) aus einem Blechteil besteht, das derart gebogen wurde, dass es für jede Stange (5) einen Rücksprung (4b) aufweist, und dass jede Stange (5) im Inneren eines Rücksprungs (4b) der Grundplatte untergebracht ist.

4. Baueinheit bestehend aus einem Fahrzeugboden und einem Befestigungssystem nach einem der Ansprüche 1 bis 3, **dadurch gekennzeichnet, dass** das Befestigungssystem mindestens zwei parallel verlaufende, voneinander beabstandete Stangen (5) aufweist.

5. Baueinheit bestehend aus einem Fahrzeugboden und einem Befestigungssystem nach Anspruch 1 oder 2, **dadurch gekennzeichnet, dass** die Grundplatte (4) zwei separate Blechteile (4'), (4") und mindestens eine Stange (5) pro Blechteil (4', 4") aufweist.

6. Baueinheit bestehend aus einem Fahrzeugboden und einem Befestigungssystem nach Anspruch 5, **dadurch gekennzeichnet, dass** sie einen Rücksprung (4b) aufweist, in dem mindestens eine Stange (5) untergebracht ist.

7. Baueinheit bestehend aus einem Fahrzeugboden und einem Befestigungssystem nach den Ansprüchen 5 oder 6, **dadurch gekennzeichnet, dass** die beiden Blechteile (4', 4") untereinander verstrebt sind.

8. Baueinheit bestehend aus einem Fahrzeugboden und einem Befestigungssystem nach Anspruch 3 oder Anspruch 6, **dadurch gekennzeichnet, dass** jeder Rücksprung (4b) mindestens eine Längsnut (12) aufweist, und dass ein zusätzlicher Boden (13) in den beiden Längsnuten (12) zweier paralleler Rücksprünge (4b) festgelegt ist.

9. Baueinheit bestehend aus einem Fahrzeugboden und einem Befestigungssystem nach den Ansprüchen 7 und 8, **dadurch gekennzeichnet, dass** die Mittel (14) zur Verstrebung der beiden Blechteile (4', 4") auch als Träger für den zusätzlichen Boden (13) dienen.

10. Baueinheit bestehend aus einem Fahrzeugboden und einem Befestigungssystem nach einem der Ansprüche 1 bis 9, **dadurch gekennzeichnet, dass** die Unterseite (4a) der Grundplatte (4) Mittel (15) aufweist, mit denen die Grundplatte (4) um eine vorbestimmte Höhe (h) höher gelagert werden kann.

11. Baueinheit bestehend aus einem Fahrzeugboden und einem Befestigungssystem nach einem der Ansprüche 1 bis 10, **dadurch gekennzeichnet, dass** die Grundplatte mit dem Boden (3) vernietet und/oder verklebt ist.

12. Baueinheit bestehend aus einem Fahrzeugboden und einem Befestigungssystem nach Anspruch 11, **dadurch gekennzeichnet, dass** die Grundplatte (4), die mit einem Klebstoff auf der Basis von mindestens einem lufthärtenden Harz am Boden festgeklebt ist, mit einer Vielzahl an Lüftungslöchern (10) versehen ist.

13. Baueinheit bestehend aus einem Fahrzeugboden und einem Befestigungssystem nach einem der Ansprüche 1 bis 12, **dadurch gekennzeichnet, dass** der Boden (3) eine Vielzahl an parallelen Noppen (3b) aufweist, und dass in den Freiräumen zwischen zwei Noppen Passstücke (7) montiert sind, welche an der Grundplatte (4) und am Boden (3) befestigt sind.

14. Baueinheit aus einem Fahrzeugboden und einem Befestigungssystem nach einem der Ansprüche 1 bis 13 und Fahrzeugsitz (2), **dadurch gekennzeichnet, dass** der Sitz (2) durch die Grundplatte (4) des Befestigungssystems hindurch an einer oder mehreren Stangen (5) des Befestigungssystems befestigt ist.

15. Baueinheit aus einem Fahrzeugboden und einem Befestigungssystem nach Anspruch 14, **dadurch gekennzeichnet, dass** die Befestigungsstange/n (5) im Wesentlichen parallel zur von vorn nach hinten sich erstreckenden Achse des Sitzes (2) verlaufen.

16. Baueinheit aus einem Fahrzeugboden und einem Befestigungssystem nach Anspruch 14 oder 15, **dadurch gekennzeichnet, dass** die Grundplatte (4) des Befestigungssystems mindestens in einem hinter dem Untergestell (2c) des Sitzes befindlichen hinteren Bereich (Z) am Boden (3) befestigt ist und auf diesem aufliegt.

17. Baueinheit aus einem Fahrzeugboden und einem Befestigungssystem nach Anspruch 16, **dadurch gekennzeichnet, dass** die Fläche des hinteren Bereichs (Z) mindestens 15 %, vorzugsweise mindestens 30 % der Gesamtoberfläche der Grundplatte (4) ausmacht.

18. Fahrzeug (1), dessen Fahrgastkabine mit einer Baueinheit aus einem Fahrzeugboden und einem Befestigungssystem nach einem der Ansprüche 1 bis 17 ausgestattet ist.

19. System zur Befestigung mindestens eines Sitzes an einem Fahrzeugboden, wobei das System eine der Befestigung und der Auflage dienende Grundplatte (4) aufweist, die derart ausgebildet ist, dass sie auf einen Boden (3) gelegt und an diesem Boden (3) befestigt werden kann, **dadurch gekennzeichnet, dass** es mindestens eine Befestigungsstange (5) aufweist, die zwischen dem Boden (3) und der Grundplatte (4) positionierbar ist.

20. System nach Anspruch 19, **dadurch gekennzeichnet, dass** die Löcher (5a, 4d; 5'a, 4'd; 5"a, 4"d) zur Befestigung mindestens eines Sitzes an jeder Stange (5) durch die Grundplatte (4) hindurch in jede Stange (5) und in die Grundplatte (4) eingebracht sind.

21. System nach Anspruch 19 oder 20, **dadurch gekennzeichnet, dass** die Grundplatte aus einem Blechteil besteht, das derart gebogen wurde, dass es mindestens einen Rücksprung (4b) aufweist, in dem mindestens eine Stange (5) untergebracht werden kann.

22. System nach Anspruch 21, **dadurch gekennzeichnet, dass** die Grundplatte, mindestens zwei parallel verlaufende, voneinander beabstandete Rücksprünge (4b) aufweist.

23. System nach Anspruch 19 oder 20, **dadurch gekennzeichnet, dass** die Grundplatte (4) zwei separate Blechteile (4', 4") und mindestens eine Stange (5) pro Blechteil (4', 4") aufweist.

24. System nach Anspruch 23, **dadurch gekennzeichnet, dass** jedes Blechteil (4', 4") einen Rücksprung (4b) aufweist, in dem mindestens eine Stange (5) untergebracht werden kann.

25. System nach Anspruch 23 oder 24, **dadurch gekennzeichnet, dass** die beiden Blechteile (4', 4") untereinander verstrebt sind.

26. System nach Anspruch 21 oder Anspruch 24, **dadurch gekennzeichnet, dass** jeder Rücksprung (4b) mindestens eine Längsnut (12) zur Festlegung eines zusätzlichen Bodens (13) aufweist.

27. System nach einem der Ansprüche 19 bis 26, **dadurch gekennzeichnet, dass** die Unterseite der Grundplatte (4) Mittel (15) aufweist, mit denen die Grundplatte (4) um eine vorbestimmte Höhe (h) höher gelagert werden kann.

28. System nach einem der Ansprüche 19 bis 27, **dadurch gekennzeichnet, dass** jede Stange (5) an der Grundplatte befestigt ist.

29. System nach einem der Ansprüche 19 bis 28, **dadurch gekennzeichnet, dass** in die Grundplatte eine Vielzahl an Lüftungslöchern (10) gebohrt sind.

## Claims

1. Vehicle floor (3) fitted with at least one system for mounting at least one seat (2), the said mounting system comprising a supporting and fixing base (4), the said base (4) being laid on the floor (3) and fixed to the floor (3), and having holes for fixing at least one seat, **characterised in that** the mounting system includes at least one bar (5) in combination with the supporting base (4), **in that** each bar (5) is positioned between the floor (3) and the base (4), and is in contact with the lower face of the base (4) turned towards the floor, and **in that**, for fixing at least one seat, each bar (5) has holes (5a, 5'a, 5"a) to correspond with the holes in the base (4d, 4'd, 4"d).

2. Vehicle floor and mounting system assembly according to Claim 1, **characterised in that** each bar (5) is fixed to the base (4).

3. Vehicle floor and mounting system assembly according to Claim 1 or 2, **characterised in that** the base (4) consists of a sheet metal plate which has been bent so as to have a step (4b) for each bar (5), and **in that** each bar (5) is housed inside a step (4b) in the base.

4. Vehicle floor and mounting system assembly according to one of the Claims 1 to 3, **characterised in that** the mounting system has at least two parallel and spaced out bars (5).

5. Vehicle floor and mounting system assembly according to Claim 1 or 2, **characterised in that** the base (4) consists of two separate sheet metal plates (4'), (4"), and at least one bar (5) for each sheet metal plate (4', 4").

6. Vehicle floor and mounting system assembly according to Claim 5, **characterised in that** it has a step (4b) in which at least one bar (5) is housed.

7. Vehicle floor and mounting system assembly according to Claims 5 or 6, **characterised in that** the two sheet metal plates (4', 4") are braced in relation to each other.

8. Vehicle floor and mounting system assembly according to Claim 3 or Claim 6, **characterised in that** each step (4b) has at least one longitudinal groove (12), and **in that** an additional floor (13) is fixed into the two longitudinal grooves (12) of two parallel steps (4b).

9. Vehicle floor and mounting system assembly according to Claims 7 and 8, **characterised in that** the means (14) which allow for bracing the two metal sheets (4', 4") in relation to each other also act as a support for the additional floor (13).

10. Vehicle floor and mounting system assembly according to one of the Claims 1 to 9, **characterised in that** the lower face (4a) of the base (4) has means (15) enabling the base (4) to be raised by a predetermined height (h).

11. Vehicle floor and mounting system assembly according to one of the Claims 1 to 10, **characterised in that** the base is glued or riveted to the floor (3).

12. Vehicle floor and mounting system assembly according to Claim 11, **characterised in that**, the base (4) being glued to the floor by means of a glue with a base of at least one resin polymerisable in contact with the air, the said base (4) is provided with a number of ventilation holes (10).

13. Vehicle floor and mounting system assembly according to one of the Claims 1 to 12, **characterised in that** the floor (3) has a number of parallel humps (3b), and **in that**, in the spaces between two humps, spacers (7) are fitted, fixed to the base (4) and to the floor (3).

14. Vehicle floor and mounting system assembly according to one of the claims 1 to 13, and a vehicle seat (2), **characterised in that** the said seat (2) is fixed to one or more bars (5) of the mounting system, through the base (4) of the mounting system.

15. Vehicle floor and vehicle seat mounting system assembly according to Claim 14, **characterised in that** the mounting bar or bars (5) are directed more or less parallel according to the front/rear centreline of the seat (2).

16. Vehicle floor and vehicle seat mounting system assembly according to Claim 14 or 15, **characterised in that** the base (4) of the mounting system is fixed and is supported on the floor (3) at least in a rear area (Z) located behind the seat mounting (2c).

17. Vehicle floor and mounting system assembly according to Claim 16, **characterised in that** the surface of the said rear area (Z) represents at least 15%, and preferably at least 30%, of the total surface of the base (4).

18. Vehicle (1) in which the interior is fitted with a vehicle floor and mounting system assembly relating to any one of the claims 1 to 17.

19. System for mounting at least one seat on a vehicle floor, the said system having a mounting and supporting base (4) designed to be laid on a floor (3) and to be fixed to the said floor (3), **characterised in that** it has at least one fixing bar (5) designed to be located between the floor (3) and the base (4).

20. System according to Claim 19, **characterised in that** holes (5a, 4d; 5'a, 4'd; 5"a, 4"d) for fixing at least one seat on each bar (5) and through the base (4) are made in each bar (5) and in the base (4).

21. System according to Claim 19 or 20, **characterised in that** the base consists of a sheet metal plate which has been bent so that it has at least one step (4b) suitable for acting as a housing for at least one bar (5).

22. System according to Claim 21, **characterised in that** the base has at least two parallel steps (4b) which are spaced apart.

23. System according to Claim 19 or 20, **characterised in that** the base (4) has two separate sheet metal plates (4'), (4"), and at least one bar (5) for each sheet metal plate (4', 4").

24. System according to Claim 23, **characterised in that** each sheet metal plate (4', 4") has a step (4b) suitable for acting as a housing for at least one bar (5).

25. System according to Claim 23 or 24, **characterised in that** the two sheet metal plates (4', 4") are braced in relation to each other.

26. System according to Claim 21 or Claim 24, **characterised in that** each step (4b) has at least one longitudinal groove (12) for fixing an additional floor (13).

27. System according to one of the Claims 19 to 26, **characterised in that** the lower face of the base (4) has means (15) enabling the base (4) to be raised by a predetermined height (h).

28. System according to one of the Claims 19 to 27, **characterised in that** each bar (5) is fixed to the base.

29. System according to one of the claims 19 to 28, **characterised in that** a number of ventilation holes (10) are drilled in the base.
